# EUROPÄISCHE PATENTANMELDUNG

(11) **EP 2 058 349 A1**
(43) Veröffentlichungstag der Anmeldung: **13.05.2009**
(21) Anmeldenummer: 07021690.8
(22) Anmeldetag: 08.11.2007
(51) Int. Cl.: C08G 18/72, C08G 18/61

(54) **Nanopartikelmodifizierte Polyisocyanate**

(71) Anmelder: Bayer MaterialScience AG, 51368 Leverkusen (DE)
(72) Erfinder: Nennemann, Arno, Dr., 51469 Bergisch Gladbach (DE); Mechtel, Markus, Dr., 51469 Bergisch Gladbach (DE); Klimmasch, Thomas, 51379 Leverkusen (DE); Gürtler, Christoph, Dr., 50676 Köln (DE); Mager, Michael, Dr., 51375 Leverkusen (DE); Niesten, Meike, Dr., 51061 Köln (DE); Maleika, Robert, Dr., 40231 Düsseldorf (DE)

(57) **Zusammenfassung**

Die vorliegende Erfindung betrifft nanopartikelmodifzierte Polyisocyanate, welche durch einen speziellen Siloxanbaustein modifiziert sind und daher verbesserte anwendungstechnische Eigenschaften sowie Lagerstabilitäten aufweisen.

## Beschreibung

Die vorliegende Erfindung betrifft nanopartikelmodifizierte Polyisocyanate, welche durch einen speziellen Siloxanbaustein modifiziert sind und daher verbesserte anwendungstechnische Eigenschaften sowie Lagerstabilitäten aufweisen.

Aus US 6 593 417 sind Beschichtungsmittel bekannt, welche auf einer Polyolkomponente basieren, die neben den Nanopartikeln auch Polysiloxane enthält. In wie weit sich diese Polysiloxane zur Modifizierung von Polyisocyanaten eignen, ist nicht beschrieben.

In EP-A 1 690 902 sind oberflächenmodifizierte Nanopartikel beschrieben, an deren Oberflächen kovalent Polysiloxanbausteine angebunden sind. Nicht beschrieben sind polysiloxanmodifizierte Bindemittel enthaltend Nanopartikel.

In einer Reihe an Patenten werden oberflächenfunktionalisierte Partikel mit potentiell gegenüber den Lackharzen reaktiven Gruppen und deren Einsatz in Beschichtungen beschrieben (EP-A 0 872 500, WO 2006/018144, DE-A 10 2005 034348, DE-A 199 33 098, DE 102 47 359). Unter anderem handelt es sich dabei um blockierte Isocyanatgruppen tragende Nanopartikel und deren Dispersionen, die in Abmischung mit Bindemitteln eingesetzt werden.

Aus EP-A 0 872 500 und WO 2006/018144 sind beispielsweise kolloidale Metalloxide bekannt, deren Nanopartikeloberflächen über kovalente Anbindung von Alkoxysilanen modifiziert wurden. Die zur Modifizierung eingesetzten Alkoxysilane sind Additionsprodukte aus Aminoalkoxysilanen und blockierten, monomeren Isocyanaten. Derartig modifizierte Metalloxide werden dann mit den Bindemitteln und Härtern gemischt bzw. als Isocyanatkomponente zur Herstellung von Lacken eingesetzt. Erfindungswesentlich ist hier die Anwesenheit von Wasser und Alkohol im Herstellprozeß zur Hydrolyse der Alkoxygruppen mit folgender Kondensation an den Partikeloberflächen, womit eine kovalente Anbindung erreicht wird. Ebenfalls erfindungswesentlich ist eine Blockierung freier NCO-Gruppen, um eine Reaktion mit Wasser und alkoholischem Lösungsmittel zu unterbinden. Es handelt sich hier somit um modifizierte Nanopartikel und nicht um nanopartikelhaltige Polyisocyanate. Demnach sind die Nanopartikel bei Reaktion kovalent in die Lackmatrix eingebunden und dominieren somit die Lackmatrix, was Erfahrungsgemäß zu Einbußen in der Flexibilität führen kann. Nachteilig ist außerdem, daß bedingt durch diesen Prozeß, der den Einsatz von Wasser und alkoholischem Lösungsmittel wesentlich macht, keine unblockierten Polyisocyanate eingesetzt werden können. Nicht beschrieben ist der Einsatz von Polysiloxanbausteinen.

Aus WO 2007/025670 und WO 2007/025671 sind hydroxyfunktionelle Polydimethylsiloxane als Teil einer Polykolkomponente von Polyurethanlacken bekannt. In wie weit sich nun solche hydroxyfunktionellen Polydimethylsiloxane zur Modifizierung von Polyisocyanaten eignen wird nicht adressiert.

Aus der nicht vorveröffentlichen deutschen Anmeldung Nr. 10 2006 054289 sind nanopartikelhaltige Polyisocyanate bekannt, welche durch Modifizierung von Polyisocyanaten mit Aminoalkoxysilanen und Zugabe von Nanopartikeln erhalten werden.

Es wurde nun überraschenderweise gefunden, dass sich solche nanopartikelhaltigen Polyisocyanate vorteilhafterweise durch hydroxyfunktionelle Polydimethylsiloxane modifizieren lassen, wodurch eine signifikante Verbesserung der anwendungstechnischen Eigenschaften daraus hergestellter Beschichtungsmittel erzielt werden kann.

Gegenstand der vorliegenden Erfindung ist daher ein Verfahren zur Herstellung nanopartikelmodifizierter Polyisocyanate, bei dem
A) Polyisocyanate mit
B) Alkoxysilanen der Formel (I)

   Q-Z-SiXₐY₃₋ₐ (I)

   in welcher
   - Q: eine gegenüber Isocyanaten reaktive Gruppe,
   - X: eine hydrolysierbare Gruppe,
   - Y: gleiche oder verschiedene Alkylgruppen
   - Z: eine C₁-C₁₂-Alkylengruppe und
   - a: eine ganze Zahl von 1 bis 3 ist,
C) hydroxylgruppenhaltige Polysiloxane mit zahlenmittleren Molekulargewichten von 200 bis 3000 g/mol und einer mittleren OH-Funktionalität von größer oder gleich 1,8 gemäß Formel (II) 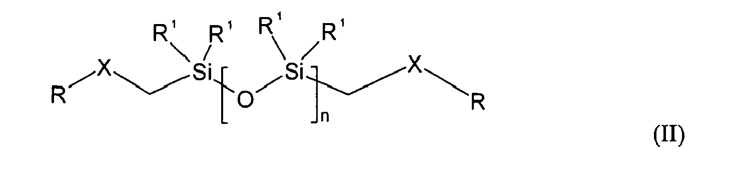
   - X: ein aliphatischer, gegebenenfalls verzweigter, gegebenenfalls Ethergruppen enthaltender C₁ bis C₂₀-Rest,
   - R: hydroxyfunktioneller Rest,
   - R¹: Wasserstoff oder ein gegebenenfalls heteroatomhaltiger C₁ bis C₂₀-Kohlenwasserstoffrest und
   - n: 1 bis 40 ist
D) gegebenenfalls Blockierungsmitteln
   umgesetzt werden, und anschließend
E) anorganische Partikel mit einer mittels dynamischer Lichtstreuung in Dispersion bestimmten mittleren Partikelgröße (Z-Mittelwert) von kleiner als 200 nm, die gegebenenfalls oberflächenmodifiziert sind, eindispergiert werden.

Wesentlich ist, dass im erfindungsgemäßen Verfahren wasserfrei gearbeitet wird, also kein Wasser separat beispielsweise als Komponente im Verfahren oder als Lösungs- oder Dispergiermittel zugesetzt wird. Bevorzugt beträgt daher der Anteil an Wasser im erfindungsgemäßen Verfahren bevorzugt weniger als 0,5 Gew.-%, besonders bevorzugt weniger als 0,1 Gew.-% bezogen auf die Gesamtmenge der eingesetzten Komponenten A) bis E).

In A) können grundsätzlich alle dem Fachmann an sich bekannten NCO-funktionellen Verbindungen mit mehr als einer NCO-Gruppe pro Molekül eingesetzt werden. Diese weisen bevorzugt NCO-Funktionalitäten von 2,3 bis 4,5, Gehalte an NCO-Gruppen von 11,0 bis 24,0 Gew.-% und Gehalte an monomeren Diisocyanaten von bevorzugt weniger als 1 Gew.-%, besonders bevorzugt kleiner 0,5 Gew.-% auf.

Solche Polyisocyanate sind durch Modifizierung einfacher aliphatischer, cycloaliphatischer, araliphatischer und/oder aromatischer Diisocyanate zugänglich und können Uretdion-, Isocyanurat-, Allophanat-, Biuret-, Iminooxadiazindion- und/oder Oxadiazintrionstrukturen aufweisen. Außerdem können solche Polyisocyanate als NCO-gruppenhaltige Prepolymere eingesetzt werden. Derartige Polyisocyanate sind beispielsweise in Laas et al. (1994), J. prakt. Chem. 336, 185-200 oder in Bock (1999), Polyurethane für Lacke und Beschichtungen, Vincentz Verlag, Hannover, S. 21-27, beschrieben.

Geeignete Diisocyanate zur Herstellung solcher Polyisocyanate sind beliebige durch Phosgenierung oder nach phosgenfreien Verfahren, beispielsweise durch thermische Urethanspaltung, zugängliche Diisocyanate des Molekulargewichtsbereichs 140 bis 400 g/mol mit aliphatisch, cycloaliphatisch, araliphatisch und/oder aromatisch gebundenen Isocyanatgruppen, wie 1,4-Diisocyanatobutan, 1,6-Diisocyanatohexan (HDI), 2- Methyl-1,5-diisocyanatopentan, 1,5-Diisocyanato-2,2-dimethylpentan, 2,2,4- bzw. 2,4,4-Trimethyl-1,6-diisocyanatohexan, 1,10-Diisocyanatodecan, 1,3- und 1,4-Diisocyanatocyclohexan, 1,3- und 1,4-Bis-(isocyanatomethyl)-cyclohexan, 1-Isocyanato- 3,3,5-trimethyl-5-isocyanatomethylcyclohexan (Isophorondiisocyanat, IPDI), 4,4'- Diisocyanatodicyclohexylmethan, 1-Isocyanato-1-methyl-4(3)isocyanatomethylcyclohexan, Bis-(isocyanatomethyl)-norbornan, 1,3- und 1,4-Bis-(1-isocyanato-1- methyl-ethyl)-benzol (TMXDI), 2,4- und 2,6-Diisocyanatotoluol (TDI), 2,4'- und 4,4'- Diisocyanatodiphenylmethan (MDI), 1,5-Diisocyanatonaphthalin oder beliebige Gemische solcher Diisocyanate.

Bevorzugt werden in A) Polyisocyanate der vorstehend genannten Art auf Basis von IPDI, MDI, TDI, HDI oder deren Gemischen eingesetzt.

Bevorzugt ist in Formel (I) die Gruppe X eine Alkoxy- oder Hydroxygruppe, besonders bevorzugt Methoxy, Ethoxy, Propoxy oder Butoxy.

Bevorzugt steht Y in Formel (I) für eine lineare oder verzweigte C₁-C₄-Alkylgruppe, bevorzugt Methyl oder Ethyl.

Z ist in Formel (I) bevorzugt eine lineare oder verzweigte C₁-C₄-Alkylengruppe.

Bevorzugt steht a in Formel (I) für 1 oder 2.

Bevorzugt ist in Formel (I) die Gruppe Q eine gegenüber Isocyanaten unter Urethan-, Harnstoff-oder Thioharnstoffbildung reagierende Gruppe. Dies sind bevorzugt OH-, SH- oder primäre oder sekundäre Aminogruppen.

Bevorzugte Aminogruppen entsprechen der Formel -NHR¹ , wobei R¹ Wasserstoff, eine C₁-C₁₂-Alkylgruppe oder eine C₆-C₂₀-Arylgruppe oder ein Asparaginsäureester-Rest der Formel R²OOC-CH₂-CH(COOR³)- , wobei R², R³ bevorzugt gleiche oder verschiedene Alkylreste sind, die gegebenenfalls auch verzweigt sein können, mit 1 bis 22 Kohlenstoffatomen, bevorzugt 1 bis 4 Kohlenstoffatomen. Besonders bevorzugt sind R², R³ jeweils Methyl- oder Ethylreste.

Solche alkoxysilanfunktionellen Asparaginsäureester sind, wie in US 5364955 beschrieben, in an sich bekannter Weise durch Addition von aminofunktionellen Alkoxysilanen an Malein- oder Fumarsäureester erhältlich.

Aminofunktionelle Alkoxysilane, wie sie als Verbindungen der Formel (I) oder zur Herstellung der alkoxysilylfunktionellen Asparaginsäureester eingesetzt werden können, sind beispielsweise 2-Aminoethyldimethylmethoxysilan, 3-Aminopropyltrimethoxysilan, 3-Aminopropyltriethoxysilan, 3-Aminopropylmethyldimethoxysilan, Aminopropylmethyldiethoxysilan.

Ferner können als Aminoalkoxxysilane mit sekundären Aminogruppen der Formel (I) in B) auch N-Methyl-3-aminopropyltrimethoxysilan, N-Methyl-3-aminopropyltriethoxysilan, N-Phenyl-3-aminopropyltrimethoxysilan, Bis-(gamma-trimethoxysilylpropyl)amin, N-Butyl-3-aminopropyltrimethoxysilan, N-Butyl-3-aminopropyltriethoxysilan, N-Ethyl-3-aminoisobutyltrimethoxysilan, N-Ethyl-3-aminoisobutyltriethoxysilan oder N-Ethyl-3-aminoisobutylmethyldimethoxysilan, N-Ethyl-3-aminoisobutylmethyldiethoxysilan sowie die analogen C₂-C₄-Alkoxysilane.

Geeignete Malein- oder Fumarsäureester zur Herstellung der Asparaginsäureester sind Maleinsäurediemethylester, Maleinsäurediethylester, Maleinsäuredi-n-butylester sowie die entsprechenden Fumarester. Maleinsäuredimethylester und Maleinsäurediethylester sind besonders bevorzugt.

Bevorzugtes Aminosilan zur Herstellung der Asparaginsäureester ist 3-Aminopropyltrimethoxysilan oder 3-Aminopropyltriethoxysilan.

Die Umsetzung der Malein- bzw. Fumarsäureester mit den Aminoalkylalkoxysilanen erfolgt innerhalb eines Temperaturbereichs von 0 bis 100 ° C, wobei die Mengenverhältnisse in der Regel so gewählt werden, daß die Ausgangsverbindungen im molaren Verhältnis 1:1 eingesetzt werden. Die Umsetzung kann in Substanz oder auch in Gegenwart von Lösungsmitteln wie z.B. Dioxan durchgeführt werden. Die Mitverwendung von Lösungsmitteln ist jedoch weniger bevorzugt. Selbstverständlich können auch Mischungen verschiedener 3-Aminoalkylalkoxysilane mit Mischungen von Fumar- und/oder Maleinsäureestern umgesetzt werden.

Bevorzugte Alkoxysilane zur Modifizierung der Polyisocyanate sind sekundäre Aminosilane, der vorstehend beschriebenen Art, besonders bevorzugt Asparaginsäureester der vorstehend beschriebenen Art sowie Di- bzw. Monoalkoxysilane.

Die vorstehend genannten Alkoxysilane können einzeln aber auch in Mischungen zur Modifizierung eingesetzt werden.

Bei der Modifizierung beträgt das Verhältnis von freien NCO-Gruppen des zu modifizierenden Isocyanats zu den NCO-reaktiven Gruppen Q des Alkoxysilans der Formel (I) bevorzugt 1 : 0,01 bis 1 : 0,75, besonders bevorzugt 1 : 0,05 bis 1 : 0,4.

Prinzipiell ist es natürlich auch möglich, höhere Anteile an NCO-Gruppen mit den vorgenannten Alkoxysilanen zu modifizieren, jedoch ist darauf zu achten, dass die Anzahl der zur Vernetzung zur Verfügung stehenden freien NCO-Gruppen für eine zufrieden stellende Vernetzung noch ausreichend ist.

Die Reaktion von Aminosilan und Polyisocyanat erfolgt bei 0 bis 100 °C, bevorzugt bei 0 bis 50 °C, besonders bevorzugt bei 15 bis 40 °C. Gegebenenfalls kann eine exotherme Reaktion durch Kühlung kontrolliert werden.

Die in C) einzusetzenden hydroxylgruppenhaltigen Polydimethylsiloxane sind erhältlich, indem entsprechende epoxyfunktionelle Polysiloxane mit hydroxyalkylfunktionellen Aminen vorzugsweise in einem stöchiometrischen Verhältnis von Epoxygruppe zu Aminofunktion umgesetzt werden.

Die dazu eingesetzten epoxyfunktionellen Siloxane weisen bevorzugt 1 bis 4, besonders bevorzugt 1 bis 2 Epoxygruppen pro Molekül auf. Ferner haben sie zahlenmittlere Molekulargewichte von bevorzugt 150 bis 2800 g/mol, besonders bevorzugt 250 bis 2000 g/mol, ganz besonders bevorzugt 250 bis 1500 g/mol.

Bevorzugte epoxyfunktionelle Siloxane sind α,ω-Epoxysiloxane entsprechend der Formel (III) mit den vorstehenden Molekulargewichten und im Mittel 2 Epoxyfunktionen pro Molekül. Solche Produkte sind beispielsweise von Momentive, Leverkusen, Deutschland, Tego, Essen, Deutschland erhältlich. Beispiele sind Tegomer^{®} E-Si2330 und Coatosil^{®} 2810 (Momentive Performance Materials). 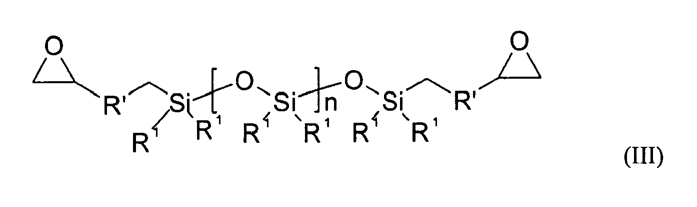 wobei
- R': ein gegebenenfalls verzweigter aliphatischer C₁- bis C₁₀-Rest,
- R¹: Wasserstoff oder ein gegebenenfalls heteroatomhaltiger C₁ bis C₂₀-Kohlenwasserstoffrest und
- n: eine ganze Zahl von 1 bis 25 ist.

Die eingesetzten Hydroxyalklyamine entsprechen der Formel (IV) 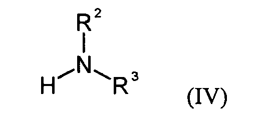 wobei
- R²: ein linearer, verzweigter oder cyclischer Hydroxyalkylrest mit 1 bis 10 Kohlenstoffatomen ist und
- R³: Wasserstoff, Alkyl-, Cycloalkyl, Aralkyl oder der Definition des Restes R² entspricht.

Bevorzugte Hydroxyalkylamine sind Ethanolamin, Propanolamin, Diethanolamin, Dipropanolamin, Ethylethanolamin, Propylethanolamin und Cyclohexyl-ethanolamin. Besonders bevorzugt sind Diethanolamin, Alkylethanolamin und Cyclohexylethanolamin. Ganz besonders bevorzugt ist Diethanolamin.

Zur Herstellung der erfindungswesentlichen modifizierten Siloxane der Komponente C) wird das epoxyfunktionelle Siloxan der vorstehend genannten Art gegebenenfalls in einem Lösemittel vorgelegt und dann mit der erforderlichen Menge des Hydroxyalkylamins oder einer Mischung mehrerer Hydroxyalkylamine umgesetzt. Die Reaktionstemperatur beträgt typischerweise 20 bis 150 °C und wird solange geführt, bis keine freien Epoxygruppen mehr nachweisbar sind.

Ein alternativer Weg zur Herstellung der erfindungswesentlichen Polydimethylsiloxane ist die Umsetzung hydroxyalkylfunktioneller Siloxandiole mit cyclischen Lactonen.

Dies geschieht in einem Verhältnis von OH-Gruppen zu Lactonfunktionen von 1:2 bis 2:1, bevorzugt in einem stöchiometrischen Verhältnis von OH-Gruppen zu Lactonfunktionen.

Die dazu eingesetzten hydroxyalkylfunktionellen Siloxane (α, ω-Carbinole) haben bevorzugt zahlenmittlere Molekulargewichte von 150 bis 2800 g/mol, besonders bevorzugt 250 bis 2000 g/mol, ganz besonders bevorzugt 250 bis 1500 g/mol. Ein Beispiel ist Baysilone OF-OH 502 6%ig (Fa. GE-Bayer Silicones, Leverkusen, Deutschland).

Bevorzugt ist R in Formel (II) ein hydroxyfunktioneller Carbonsäureester der Formel 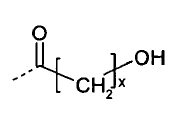 wobei x = 3 bis 5, bevorzugt 5 ist,
oder eine hydroxyalkylfunktionelle Aminogruppe der Formel 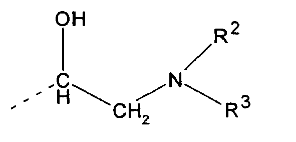 wobei
- R²: ein aliphatischer linearer, verzweigter oder cyclischer Hydroxyalkylrest und
- R³: Wasserstoff oder entsprechend der Definition des Restes R² ist.

Besonders bevorzugt ist R in Formel (II) eine hydroxyalkylfunktionelle Aminogruppe der vorgenannten Art.

R¹ in den Formeln (II) und (III) ist bevorzugt Phenyl-, Alkyl-, Aralkyl-, Fluoralkyl-, Alkylethylencopropylenoxidgruppen oder Wasserstoff, wobei Phenyl und Methyl besonders bevorzugt sind. Die beiden R¹-Substituenten an einem Si-Atom können sich auch unterscheiden. Ganz besonders bevorzugt ist R¹ eine Methylgruppe, so dass es sich um reine Dimethylsilyleinheiten handelt.

Bevorzugt haben die wie vorstehend beschrieben erhältlichen hydroxylgruppenhaltigen Siloxane der Komponente C) zahlenmittlere Molekulargewichte von 250 bis 2250 g/mol, besonders bevorzugt 250 bis 1500 g/mol.

Bei der Modifizierung beträgt das Verhältnis von freien NCO-Gruppen des in A) eingesetzten zu modifizierenden Polyisocyanats zu den NCO-reaktiven OH-Gruppen des hydroxylgruppenhaltigen Polydimethylsiloxans der Formel (II) bevorzugt 1 : 0,001 bis 1 : 0,4, besonders bevorzugt 1 : 0,01 bis 1 : 0,2.

Im Anschluss an die Silan- und Polydimethylsiloxan-Modifizierung können die freien NCO-Gruppen der so modifizierten Polyisocyanate noch weitergehend modifiziert werden. Dies kann beispielsweise eine partielle oder vollständige Blockierung der freien NCO-Gruppen mit dem Fachmann an sich bekannten Blockierungsmitteln sein (zur Blockierung von Isocyanatgruppen siehe DE-A 10226927, EP-A 0 576 952, EP-A 0 566 953, EP-A 0 159 117, US-A 4 482 721, WO 97/12924 oder EP-A 0 744 423). Beispielsweise zu nennen sind Butanonoxim, ε-Caprolactam, Methyl-ethyl-ketoxim, Malonsäureester, sekundäre Amine sowie Triazol- und Pyrazolderivate.

Eine Blockierung der NCO-Gruppen vor Einarbeitung der Nanopartikel hat den Vorteil, dass die darauf basierenden nanopartikelmodifizierten Polyisocyanate eine tendenziell bessere Stabilität in Bezug auf den Gehalt an später zur Vernetzung zur Verfügung stehenden NCO-Gruppen aufweisen als analoge Produkte, welche noch freie NCO-Gruppen besitzen.

Die Modifizierung der Polyisocyanate erfolgt bevorzugt in der Reihenfolge Polydimethylsiloxan, Silan und Blockierungsmittel.

Die Reaktion von hydroxyfunktionellem Polydimethylsiloxan und Polyisocyanat erfolgt bei 0 - 100 °C, bevorzugt bei 10 - 90 °C, besonders bevorzugt bei 15 - 80 °C. Gegebenenfalls können gängige Katalysatoren eingesetzt werden, die die Reaktion R-OH mit NCO katalysieren.

Im erfindungsgemäßen Verfahren können prinzipiell zu jedem Zeitpunkt die dem Fachmann an sich bekannten gegenüber NCO-Gruppen inerten Lösemittel zugesetzt werden. Beispielsweise sind dies Lösungsmittel wie Butylacetat, 1-Methoxy-2-propylacetat, Ethylacetat, Toluol, Xylol, Solventnaphta sowie deren Mischungen.

Während oder im Anschluss an die Modifizierung des Polyisocyanats werden die gegebenenfalls oberflächenmodifizierten Nanopartikel E) eingebracht. Dies kann durch einfaches Einrühren der Partikel erfolgen. Denkbar sind jedoch auch der Einsatz erhöhter Dispergierenergie, wie beispielsweise durch Ultraschall, Strahldispergierung oder Hochgeschwindigkeitsrüher nach dem Rotor-Stator-Prinzip erfolgen kann. Bevorzugt ist einfaches mechanisches Einrühren.

Die Partikel können prinzipiell sowohl in Pulverform als auch in Form von Suspensionen oder Dispersionen in geeigneten, vorzugsweise gegenüber Isocyanaten inerten Lösungsmitteln eingesetzt werden. Bevorzugt ist der Einsatz der Partikel in Form von Dispersionen in organischen Lösungsmitteln.

Für die Organosole geeignete Lösemittel sind Methanol, Ethanol, i-Propanol, Aceton, 2-Butanon, Methyl-isobutylketon, sowie die an sich in der Polyurethanchemie gängigen Lösemittel wie Butylacetat, Ethylacetat, 1-Methoxy-2-propylacetat, Toluol, 2-Butanon, Xylol, 1,4-Dioxan, Diacetonalkohol, N-Methylpyrrolidon, Dimethylacetamid, Dimethylformamid, Dimethylsulfoxid, Methylethylketon oder beliebige Gemische solcher Lösungsmittel.

Bevorzugte Lösungsmittel hierbei die an sich in der Polyurethanchemie gängigen Lösemittel wie Butylacetat, Ethylacetat, 1-Methoxy-2-propylacetat, Toluol, 2-Butanon, Xylol, 1,4-Dioxan, Diacetonalkohol, N-Methylpyrrolidon, Dimethylacetamid, Dimethylformamid, Dimethylsulfoxid, Methylethylketon oder beliebige Gemische solcher Lösungsmittel.

Besonders bevorzugte Lösungsmittel sind alkohol- und ketonfreie Lösungsmittel wie Butylacetat, 1-Methoxy-2-propylacetat, Ethylacetat, Toluol, Xylol, Solventnaphta sowie deren Mischungen.

In Bezug auf den Gehalt an später zur Vernetzung zur Verfügung stehenden NCO-Gruppen hat es sich als vorteilhaft erwiesen, auf Ketone oder Alkohole als Lösemittel sowohl für die Partikeldispersionen als auch als Prozesslösemittel während der Polyisocyanatmodifizierung zu verzichten, da hierbei ein vergleichsweise höherer Abbau von NCO-Gruppen während der Lagerung der daraus hergestellten nanopartikelmodifizierten Polyisocyanate zu beobachten ist. Werden die Polyisocyanate in einem zusätzlichen Schritt blockiert, so können auch Ketone oder Alkohole als Lösungsmittel eingesetzt werden.

In einer bevorzugten Ausführungsform der Erfindung werden als Partikel in E) anorganische Oxide, Mischoxide, Hydroxide, Sulfate, Carbonate, Carbide, Boride und Nitride von Elementen der II bis IV Hauptgruppe und/oder Elemente der I bis VIII Nebengruppe des Periodensystems einschließlich der Lanthanide verwendet. Besonders bevorzugte Partikel der Komponente E) sind Siliziumoxid, Aluminiumoxid, Ceroxid, Zirkonoxid, Zinkoxid, Nioboxid und Titanoxid. Ganz besonders bevorzugt sind Siliziumoxid-Nanopartikel.

Die in E) eingesetzten Partikel weisen bevorzugt mittlere Partikelgrößen mittels dynamischer Lichtstreuung in Dispersion bestimmt als Z-Mittelwert von 5 bis 100 nm, besonders bevorzugt 5 bis 50 nm auf.

Bevorzugt weisen wenigstens 75 %, besonders bevorzugt wenigstens 90 %, ganz besonders bevorzugt wenigstens 95 % aller in E) eingesetzten Partikel die vorstehend definierten Größen, auf.

Bevorzugt werden die Partikel oberflächenmodifiziert eingesetzt. Falls die in E) eingesetzten Partikel oberflächenmodifiziert sein sollen, werden sie vor Einarbeitung in das modifizierte Polyisocyanat beispielsweise unter Silanisierung umgesetzt. Diese Methode ist literaturbekannt und beispielsweise in DE-A 19846660 oder WO 03/44099 beschrieben.

Weiterhin können die Oberflächen adsorptiv/assoziativ durch Tenside mit Kopfgruppen entsprechender Wechselwirkungen zu den Teilchenoberflächen oder Blockcopolymere modifiziert werden, wie beispielsweise in WO 2006/008120 bzw. Foerster, S. & Antonietti, M., Advanced Materials, 10, no. 3, (1998) 195 modifiziert werden.

Bevorzugte Oberflächenmodifizierung ist die Silanisierung mit Alkoxysilanen und/oder Chlorsilanen. Ganz besonders bevorzugt handelt es sich um Silane, die neben den Alkoxygruppen interte Alkyl- oder Aralkylreste aber keine weiteren funktionellen Gruppen tragen.

Beispiele kommerzieller Partikeldispersionen, wie sie sich für E) eignen sind Organosilicasol^{™} (Nissan Chemical America Corporation, USA), Nanobyk^{®} 3650 (BYK Chemie, Wesel, Deutschland), Hanse XP21/1264 oder Hanse XP21/1184 (Hanse Chemie, Hamburg, Deutschland), HIGHLINK^{®} NanO G (Clariant GmbH, Sulzbach, Deutschland). Geeignete Organosole weisen einen Feststoffgehalt von 10 bis 60 Gew.-%, bevorzugt 15 bis 50 Gew.-% auf.

Der Gehalt der in E) eingesetzten Partikel (gerechnet als Feststoff) bezogen auf das Gesamtsystem aus modifiziertem Polyisocyanat und Partikeln beträgt typischerweise 1 bis 70 Gew.-%, bevorzugt 5 bis 60, besonders bevorzugt 25 bis 55 Gew.-%.

Der Feststoffgehalt erfindungsgemäßer, nanopartikelhaltiger Polyisocyanate liegt bei 20 bis 100 Gew.-%, bevorzugt 40 bis 90 Gew.-%, besonders bevorzugt 40 bis 70 Gew.-%.

Ein weiterer Gegenstand der Erfindung sind die erfindungsgemäß erhältlichen nanopartikelmodifizierten Polyisocyanate sowie Polyurethansysteme, die diese enthalten.

Solche Polyurethansysteme können je nach dem, ob die NCO-Gruppen der erfindungsgemäßen Polyisocyanate blockiert sind als 1- oder 2-Komponenten-PUR-Systeme formuliert werden.

Neben den erfindungsgemäßen nanopartikelmodifizierten Polyisocyanaten enthalten die Polyurethansysteme der vorliegenden Erfindung Polyhydroxy- und/oder Polyaminverbindungen zur Vernetzung. Daneben können noch weitere von den erfindungsgemäßen Polyisocyanaten verschiedene Polyisocyanate sowie Hilfs- und Zusatzstoffe enthalten sein.

Geeignete Polyhydroxylverbindungen sind beispielsweise tri- und/oder tetrafunktionelle Alkohole und/oder die in der Beschichtungstechnologie an sich üblichen Polyetherpolyole, Polyesterpolyole und/oder Polyacrylatpolyole.

Ferner können zur Vernetzung auch Polyurethane oder Polyharnstoffe, die aufgrund der in den Urethan- bzw. Harnstoffgruppen vorliegenden aktiven Wasserstoffatome mit Polyisocyanaten vernetzbar sind, eingesetzt werden.

Ebenfalls möglich ist der Einsatz von Polyaminen, deren Aminogruppen blockiert sein können, wie Polyketimine, Polyaldimine oder Oxazolane.

Bevorzugt werden zur Vernetzung der erfindungsgemäßen Polyisocyanate Polyacrylatpolyole und Polyesterpolyole eingesetzt.

Als Hilfs- und Zusatzstoffe können Lösemittel wie Butylacetat, Ethylacetat, 1-Methoxy-2-propylacetat, Toluol, 2-Butanon, Xylol, 1,4-Dioxan, Diacetonalkohol, N-Methylpyrrolidon, Dimethylacetamid, Dimethylformamid, Dimethylsulfoxid oder beliebige Gemische solcher Lösungsmittel verwendet werden. Bevorzugte Lösungsmittel sind Butylacetat, 2-Ethylacetat und Diacetoalkohol.

Ferner können als Hilfs- und Zusatzstoffe wie anorganische oder organische Pigmente, Lichtschutzmittel, Lackadditive, wie Dispergier-, Verlauf-, Verdickungs-, Entschäumungs- und andere Hilfsmittel, Haftmittel, Fungizide, Bakterizide, Stabilisatoren oder Inhibitoren und Katalysatoren enthalten sein.

Die Applikation des erfindungsgemäßen Polyurethansysteme auf Substrate erfolgt nach den in der Beschichtungstechnologie üblichen Applikationsverfahren, wie z. B. Spritzen, Fluten, Tauchen, Schleudern oder Rakeln.

### Beispiele:

Soweit nicht abweichend vermerkt, sind die Prozentangaben als Gewichtsprozent zu verstehen.

Desmophen^{®} A 870 Polyacrylatpolyol, 70 % in Butylacetat, OH-Zahl 97, OH-Gehalt 2,95 %, Viskosität bei 23 °C ca. 3500 mPas, Handelsprodukt der BayerMaterialScience AG, Leverkusen, DE

Desmodur^{®} N 3300: Hexamethylendiisocyanat Trimerisat; NCO-Gehalt 21,8 +/- 0,3 Gew.-%, Viskosität bei 23°C ca. 3000 mPas, Bayer MaterialScience AG, Leverkusen, DE

Desmodur^{®} N 3390 BA: Hexamethylendiisocyanat Trimerisat in Butylacetat; NCO-Gehalt 19,6 +/-0,3 Gew.-%, Viskosität bei 23°C ca. 500 mPas, Bayer MaterialScience AG, Leverkusen, DE

Desmodur^{®} VP LS 2253: 3,5-Dimethylpyrazol-blockiertes Polyisocyanat (Trimerisat) auf Basis HDI; 75 % in SN 100/MPA (17:8), Viskosität bei 23°C ca. 3600 mPas, blockierter NCO-Gehalt 10,5 %, Equivalentgewicht 400, Bayer MaterialScience AG, Leverkusen, DE

Organosilicasol^{™} MEK-ST: kolloidales silica dispergiert in Methylethylketon, Teilchengröße 10-15 nm (Herstellerangabe), 30 wt% SiO₂, < 0,5 wt% H₂O, < 5 mPa s Viskosität, Nissan Chemical America Corporation, USA.

Coatosil^{®} 2810: Epoxy-modifizierte Siliconflüssigkeit Epoxid-Gehalt 11,4 %. Momentive Performance Materials, Leverkusen, DE.

Baysilone®-Lackadditiv OL 17: Verlaufshilfsmittel, Borchers GmbH, Langenfeld, DE)

BYK^{®} 070: Entschäumer, BYK-Chemie GmbH, Wesel, DE

Tinuvin^{®} 123: HALS Amin, Ciba Specialty Chemicals, Basel, CH

Tinuvin^{®} 384-2: UV-Absorber, Ciba Specialty Chemicals, Basel, CH

Solventnaphtha^{®} 100: aromatenhaltiges Lösemittelgemisch, Bayer MaterialScience AG, Leverkusen, DE

Die Bestimmung der Hydroxylzahl (OH-Zahl) erfolgte gemäß DIN 53240-2.

Die Viskositätsbestimmung erfolgte mittels Rotationsviskosimeter "RotoVisco 1" der Fa. Haake, Deutschland gemäß DIN EN ISO 3219.

Die Bestimmung der Säurezahl erfolgte gemäß DIN EN ISO 2114.

Die Farbzahlbestimmung (APHA) erfolgte gemäß DIN EN 1557.

Die Bestimmung des NCO-Gehaltes erfolgte gemäß DIN EN ISO 11909.

Pendeldämpfung (König) nach DIN EN ISO 1522 "Pendeldämpfungsprüfung"

Chemikalienbeständigkei*t* nach DIN EN ISO 2812-5 "Beschichtungsstoffe - Bestimmung der Beständigkeit gegen Flüssigkeiten - Teil 5: Verfahren mit dem Gradientenofen"

Kratzfestigkeit Laborwaschanlage (Nassverkratzung) nach DIN EN ISO 20566 "Beschichtungsstoffe - Prüfung der Kratzfestigkeit eines Beschichtungssystems mit einer Laborwaschanlage"

### Bestimmung der Teilchengröße

Die Teilchengrößen wurden mittels Dynamischer Lichtstreuuung mit einem HPPS particle size analyzer (Fa. Malvern, Worcestershire, UK) bestimmt. Die Auswertung erfolgte über die Dispersion Technology Software 4,10. Um Mehrfachstreuung zu vermeiden wurde eine hochverdünnte Dispersion der Nanopartikel hergestellt. Ein Tropfen einer verdünnten Nanopartikeldispersion (ca. 0,1 - 10 %) wurde in eine Küvette enthaltend ca. 2 ml des gleichen Lösemittels wie die Dispersion gegeben, geschüttelt und im HPPS analyzer bei 20 bis 25 °C vermessen. Wie dem Fachmann allgemein bekannt, wurden vorher die relevanten Parameter des Dispergiermediums - Temperatur, Viskosität und Brechungsindex - in die Software eingegeben. Im Falle organischer Lösemittel wurde eine Glasküvette eingesetzt. Als Resultat wurde eine Intensitäts- bzw. Volumen- Teilchendurchmesser-Kurve sowie der Z-Mittelwert für den Teilchendurchmesser erhalten. Es wurde darauf geachtet, daß der Polydispersitätsindex < 0,5 war.

### Bestimmung der Lösemittelbeständigkeit

Mit dieser Prüfung wurde die Widerstandsfähigkeit eines ausgehärteten Lackfilmes gegen verschiedene Lösemittel festgestellt. Hierzu lässt man die Lösemittel für eine bestimmte Zeit auf die Lackoberfläche einwirken. Anschließend wird visuell und durch Abtasten mit der Hand beurteilt, ob und welche Veränderungen auf der Prüffläche aufgetreten sind. Der Lackfilm befindet sich in der Regel auf einer Glasplatte, andere Substrate sind ebenfalls möglich. Der Reagenzglasständer mit den Lösemitteln Xylol, 1-Methoxypropylacetat-2, Ethylacetat und Aceton (s.u.) wird so auf die Lackoberfläche aufgesetzt, dass die Öffnungen der Reagenzgläser mit den Wattepfropfen auf dem Film aufliegen. Wichtig ist die dadurch entstehende Benetzung der Lackoberfläche durch das Lösemittel. Nach der festgelegten Einwirkzeit der Lösemittel von 1 Minute und 5 Minuten wird der Reagenzglasständer von der Lackoberfläche entfernt. Anschließend werden die Lösemittelreste sofort mittels eines saugfähigen Papiers oder Textilgewebe entfernt. Man mustert nun sofort die

Prüffläche nach behutsamem Kratzen mit dem Fingernagel visuell auf Veränderungen ab. Folgende Stufen werden unterschieden:

| | |
|---|---|
| 0 =unverändert | |
| 1 =Spur verändert | nur sichtbare Veränderung |
| 2 =gering verändert | mit Fingernagel spürbare Erweichung feststellbar |
| 3 =merklich verändert | mit dem Fingernagel starke Erweichung feststellbar |
| 4 =stark verändert | mit dem Fingernagel bis zum Untergrund |
| 5 =zerstört | ohne Fremdeinwirkung Lackoberfläche zerstört |

Die gefundenen Bewertungsstufen für die oben angegebenen Lösemittel werden in der folgenden Reihenfolge dokumentiert:

| | |
|---|---|
| Beispiel | 0000 (keine Veränderung) |
| Beispiel | 0001 (sichtbare Veränderung nur bei Aceton) |

Dabei beschreibt die Zahlenreihenfolge die Reihenfolger der ausgetesteten Lösungsmittel (Xylol, Methoxypropylacetat, Ethylacetat, Aceton)

### Bestimmung der Kratzfestigkeit mittels Hammertest (Trockenverkratzung)

Die Verkratzung wird mit einem Hammer (Gewicht: 800 g ohne Stiel) durchgeführt, an dessen flacher Seite Stahlwolle oder Polishing Paper befestigt werden. Dazu wird der Hammer vorsichtig im rechten Winkel auf die beschichtete Oberfläche aufgesetzt und ohne zu verkanten und ohne zusätzliche Körperkraft in einer Spur über die Beschichtung geführt. Es werden 10 Doppelhübe durchgeführt. Nach der Belastung mit dem Verkratzungsmedium wird die Prüffläche mit einem weichen Tuch gereinigt und anschließend der Glanz nach DIN EN ISO 2813 quer zur Verkratzungsrichtung gemessen. Es dürfen nur homogene Bereiche vermessen werden.

### Beispiel 1

N-(3-Trimethoxysilylpropyl)asparaginsäurediethylester wurde, entsprechend der Lehre aus US-A 5 364 955, Beispiel 5, durch Umsetzung von äquimolaren Mengen 3-Aminopropyltrimethoxysilan mit Maleinsäurediethylester hergestellt.

### Beispiel 2a: hydroxyfunktionelles Polydimethylsiloxan

Entsprechend WO 2007025670 wurden 770 g des epoxyfunktionellen Polydimethylsiloxans Coatsosil^{®} 2810 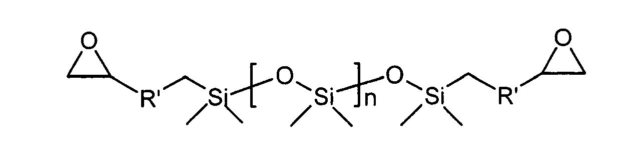 vorgelegt, auf 80 °C vorgeheizt und mit 231 g Diethanolamin (Valverhältnis Epoxid / Amin 1:1) versetzt. Diese Mischung wurde anschließend 2 Stunden bei 100°C gerührt. Das Produkt hatte einen Epoxidgehalt < 0,01 %, eine OH-Zahl von ca. 365 mg KOH/g (11,1 %) und eine Viskosität bei 23°C von ca. 2900 mPas.

### Beispiel 2b - 2c

Analog zu Beispiel 2a wurde die Umsetzung des Bisepoxids mit verschiedenen Aminen durchgeführt. Die Epoxidgehalte lagen nach Abklingen der Reaktion < 0,01 %. Teilweise wurde die Synthese in Gegenwart von Butylacetat durchgeführt.

| **Beispiel** | **Amin** | **Butylacetat** **[%]** | **OH-Zahl** **[mg KOH/g]** |
|---|---|---|---|
| 2a | Diethanolamin | - | 365 |
| 2b | 2-Ethylaminoethanol | - | 249 |
| 2c | Cyclohexylaminoethanol | 25 | 116 |

### Beispiel 2d

438 g (2 val) des PDMS-Bishydroxids Tegomer H-Si2111 (OH-Gehalt 3,9 %, Molmasse 876 g/mol; Degussa AG, Essen, DE) wurden mit 57 g Caprolacton (1 val) und 0,05 % w/w DBTL gemischt und bei 150 °C 6 h gerührt. Es wurde ein transparentes Produkt mit einer OH-Zahl von 113 mg KOH/g erhalten.

### Beispiel 3

In einem 2 L-Kolben wurden 500 g Organosilicasol^{™} MEK-ST und 500 g Butylacetat eingewogen. Die Dispersion wurde im Rotationsverdampfer bei 60°C und 120 mbar eingeengt und der Rückstand wieder mit 500 g Butylacetat aufgefüllt. Dieser Vorgang wurde so lange wiederholt, bis in der Dispersion der Methylethylketon-Anteil < 0,1 Gew.-% gesunken war (mittels GC-FID ermittelt).

Sowohl das in Beispiel 3 eingesetzte Organosilicasol^{™} MEK-ST als auch das Butylacetat und die resultierende Dispersion in Butylacetat wurden jeweils über Molekularsieb 4 A getrocknet.

Der Wassergehalt des so erhaltenen Silica-Organosols in Butylacetat lag bei 440 ppm. Der Feststoffgehalt wurde auf 30 Gew.-% eingestellt. Der Z-Mittelwert über Dynamische Lichtstreuung bestimmt lag bei 23 nm.

**Beispiel 5: Vergleichspolyisocyanat nach** DE 10 2006 054289

In einer Standard-Rührapparatur wurden 192,7 g (1 val) Desmodur^{®} N3300 (Hexamethylendiisocyanat Trimerisat; NCO-Gehalt 21,8 +/- 0,3 Gew.-%, Viskosität bei 23°C ca. 3000 mPas, Bayer MaterialScience AG, Leverkusen, DE) in 85 g Butylacetat bei 60 °C vorgelegt. Dann wurden vorsichtig 70,3 g (0,2 val) des Alkoxysilans aus Beispiel 1 zugetropft, wobei die Temperatur auf maximal 60 °C gehalten wurde. Nach Beendigung der Reaktion (Überprüfung des NCO-Gehaltes IRspektroskopisch auf Konstanz) wurde auf RT abgekühlt und vorsichtig 76,9 g 1,3-Dimethylpyrrazol (DMP) hinzugegeben und die Temperatur bei 50 °C gehalten, bis der NCO-Peak im IR-Spektrometer verschwunden war.

Man erhielt ein farbloses, flüssiges, blockiertes Polyisocyanat mit folgenden Kennzahlen: Feststoffgehalt 80 Gew.-%, Viskosität 3440 mPas bei 23°C sowie 7,91 % blockierter NCO-Gehalt bezogen auf DMP.

### Beispiel 6a: erfindungswesentliches silan- und siloxanmodifiziertes PIC

In einer Standard-Rührapparatur wurden 275,85 g (1 val) Desmodur^{®} N3300 in 250 g Butylacetat bei 80 °C vorgelegt und 2 l/h Stickstoff übergeleitet. Anschließend wurde 4,41 g (0,02 val) des Siloxanblockcopolyols aus Beispiel 2a bei 80 °C zugegeben und die Temperatur 4 h gehalten. Der theoretisch erwartete NCO-Gehaltes wurde titrimetrisch überprüft und dann auf Raumtemperatur abgekühlt. Innerhalb von 3 h wurden 112,88 g (0,2 val) des Alkoxysilans aus Beispiel 1 sowie 250 g Butylacetat hinzugefügt, wobei die Temperatur durch Eiskühlung unter 40 °C gehalten wurde. Nach Überprüfung des theoretischen NCO-Gehaltes wurde auf RT abgekühlt und in ca. 15 min 106,87 g (0,78 val) des Blockierungsmittels Dimethylpyrrazol hinzugegeben unter Regelung der Temperatur auf maximal 40 °C. Die Temperatur wurde solange bei 40 °C gehalten, bis der NCO-peak im IR-Spektrometer verschwunden war.

Man erhielt ein klares, flüssiges, blockiertes Polyisocyanat mit folgenden Kennzahlen: Feststoffgehalt 48,7 Gew.-% sowie 4,67 % blockierter NCO-Gehalt bezogen auf DMP.

### Beispiel 6b bis 6h

Analog zu Beispiel 6a wurden weitere, erfindungswesentliche modifizierte PIC hergestellt. Als Polyisocyanat wurde Desmodur N3300 eingesetzt. Gegebenenfalls wurde der Polysiloxanbaustein mit 50 g Butylacetat gemischt. Die Val-Verhältnisse PIC / Polysiloxan / Silan / Blockierungsmittel wurden bei 1 / 0,02 / 0,2 / 0,78 gewählt. Es wurden klare, lagerstabile Produkte erhalten.

| **Bsp.** | **Polysiloxan** | **Silan** | **Blockierungsmittel** | **NCO** **[%]** | **FK** **[%]** |
|---|---|---|---|---|---|
| 6a | Beispiel 2a | Beispiel 1 | DMP | 4,67 | 48,7 |
| 6b | Beispiel 2b | Beispiel 1 | DMP | 4,78 | 48,4 |
| 6c | Beispiel 2c | Beispiel 1 | DMP | 4,65 | 48,7 |
| 6d | Beispiel 2d | Beispiel 1 | DMP | 4,57 | 48,1 |
| 6e | Baysilon OF/OH 3 % (Fa. Bayer/GE-Silicones, Leverkusen, DE) | Beispiel 1 | DMP | 4,56 | 47,5 |
| 6f | Baysilon OF/OH 6 % (Fa. Bayer/GE-Silicones, Leverkusen, DE) | Beispiel 1 | DMP | 4,64 | 47,6 |
| 6g | Beispiel 2a | Beispiel 1 | Butanonoxim | 4,91 | 48,9 |
| 6h | Beispiel 2a | Dynasilan 1189 (Degussa AG, Marl, DE) | DMP | 5,13 | 48,5 |

| | | | | | |
|---|---|---|---|---|---|
| NCO-Gehalt: bezogen auf Blockierungsmittel | | | | | |

### Beispiel 7: siloxanmodifiziertes Vergleichspolyisocyanat ohne Aminosiloxanmodifizierung

In einer Standard-Rührapparatur wurden 332,73 g (1 val) Desmodur^{®} N3300 in 250 g Butylacetat bei 80 °C vorgelegt und 2 l/h Stickstoff übergeleitet. Anschließend wurde 5,31 g (0,02 val) des Siloxanblockcopolyols aus Beispiel 2 bei 80 °C zugegeben und die Temperatur 4 h gehalten. Der theoretisch erwartete NCO-Gehaltes wurde titrimetrisch überprüft und dann auf Raumtemperatur abgekühlt sowie 250 g Butylacetat hinzugefügt. Nach Überprüfung des theoretischen NCO-Gehaltes wurde auf RT abgekühlt und in ca. 15 min 161,95 g (0,98 val) des Blockierungsmittels Dimethylpyrrazol hinzugegeben unter Regelung der Temperatur auf maximal 40 °C. Die Temperatur wurde solange bei 40 °C gehalten, bis der NCO-peak im IR-Spektrometer verschwunden war.

Man erhielt ein trübes, flockiges, blockiertes Polyisocyanat mit folgenden Kennzahlen: Feststoffgehalt 49,7 Gew.-% sowie 7,08 % blockierter NCO-Gehalt bezogen auf DMP.

### Beispiel 8a: Vergleichspolyisocyanat, nanopartikelhaltig

344,2 g des Produkts aus Beispiel 5 wurden in einer Standard-Rührapparatur vorgelegt und mit 955,8 g Organosilicasol^{™} MEK-ST innerhalb von 30 min versetzt. Das resultierende modifizierte Polyisocyanat hatte einen NCO-Gehalt von 2,1 Gew.-% bei einem Feststoffgehalt von 42,7 Gew.-%. Der Anteil an SiO₂-Nanopartikeln in der Dispersion betrug 22 Gew.-% und im Feststoff 50,8 Gew.-%. Das Produkt war leicht trüb und etwas gelblich.

Anschließend wurden aus 845 g dieses Produktes am Rotationsverdampfer 262 g Lösemittel bei 60 °C und 120 mbar im Vakuum entfernt. Der Festkörper resultierte bei 62,3 % und der NCO-Gehalt bei 3,01 %.

### Beispiel 8b: Vergleichspolyisocyanat, nanopartikelhaltig

344,2 g des Produkts aus Beispiel 5 wurden in einer Standard-Rührapparatur vorgelegt und mit 955,8 g Organosilicasol aus Beispiel 3 innerhalb von 30 min versetzt. Das resultierende modifizierte Polyisocyanat war transparent und hatte einen NCO-Gehalt von 1,8 Gew.-% bei einem Feststoffgehalt von 37,1 Gew.-%. Der Anteil an SiO₂-Nanopartikeln in der Dispersion betrug 22,1 Gew.-% und im Feststoff 51 Gew.-%. Das Produkt war klar und etwas gelblich.

Anschließend wurden aus 895 g dieses Produktes am Rotationsverdampfer 374 g Lösemittel bei 60 °C und 120 mbar im Vakuum entfernt. Der Festkörper resultierte bei 65,0 % und der NCO-Gehalt bei 3,13 %.

### Beispiel 9: erfindungsgemäßes Polyisocyanat, nanopartikelhaltig

187,57 g des Produkts aus Beispiel 6a wurden in einer Standard-Rührapparatur vorgelegt und mit 312,43 g Organosilicasol gemäß Beispiel 3 innerhalb von 30 min versetzt. Das resultierende modifizierte, blockierte Polyisocyanat war flüssig und transparent und hatte einen blockierten NCO-Gehalt von 1,81 Gew.-% bei einem Feststoffgehalt von 37,01 Gew.-%. Der Anteil an SiO₂-Nanopartikeln in der Dispersion betrug 18,7 Gew.-% und im Feststoff 50,6 Gew.-%. Die Lagerstabilität betrug > 3 Monate.

### Beispiel 10: erfindungsgemäßes Polyisocyanat, nanopartikelhaltig

1487,5 g des Produkts aus Beispiel 6 wurden in einer Standard-Rührapparatur vorgelegt und mit 2512,48 g Organosilicasol-MEK-ST (Nissan Chem. Corp.) innerhalb von 30 min versetzt. Das resultierende modifizierte, blockierte Polyisocyanat war flüssig und transparent und hatte einen blockierten NCO-Gehalt von 1,74 Gew.-% bei einem Feststoffgehalt von 37,44 Gew.-%. Der Anteil an SiO₂-Nanopartikeln in der Dispersion betrug 18,8 Gew.-% und im Feststoff 50,4 Gew.-%.

### Beispiel 11: erfindungsgemäßes Polyisocyanat, nanopartikelhaltig

Aus 340,3 g des Produkts aus Beispiel 9 wurden am Rotationsverdampfer bei 60 °C und 120 mbar 140,3 g Lösemittel entfernt. Das resultierende nanopartikel-haltige Polyisocyanat war transparent und hatte einen blockierten NCO-Gehalt von 3,18 Gew.-% bei einem Feststoffgehalt von 67,1 Gew.-%. Der Anteil an SiO₂-Nanopartikeln in der Dispersion betrug 31,8 Gew.-% und im Feststoff 50,6 Gew.-%. Die Viskosität bei 23 °C betrug 1620 mPas. Die Lagerstabilität betrug > 3 Monate.

### Beispiel 12: erfindungsgemäßes Polyisocyanat, nanopartikelhaltig

Aus 771,3 g des Produkts aus Beispiel 10 wurden am Rotationsverdampfer bei 60 °C und 120 mbar 289 g Lösemittel entfernt. Das resultierende nanopartikel-haltige Polyisocyanat war transparent und hatte einen blockierten NCO-Gehalt von 2,86 Gew.-% bei einem Feststoffgehalt von 61,5 Gew.-%. Der Anteil an SiO2-Nanopartikeln in der Dispersion betrug 30,9 Gew.-% und im Feststoff 50,4 Gew.-%.

### Beispiel 13a-g erfindungsgemäße Polyisocyanate, nanopartikelhaltig

Analog zu Beispiel 9 wurden weitere erfindungsgemäße Polyisocyanate, nanopartikelhaltig, hergestellt und gegebenenfalls Lösemittel abdestilliert. Es wurden klare, flüssige Produkte erhalten.

| **Beispiel** | **Polyisocyanat** | **Organosol** | **NCO** **[%]** | **FK** **[%]** |
|---|---|---|---|---|
| 13a | 6b | Beispiel 3 | 2,86 | 62,2 |
| 13b | 6c | Organosol MEK-ST | 1,78 | 37 |
| 13c | 6d | Organosol MEK-ST | 1,78 | 36,8 |
| 13d | 6e | Organosol MEK | 1,8 | 36,9 |
| 13e | 6f | Organosol MEK | 1,82 | 36,6 |
| 13f | 6g | Beispiel 3 | 2,88 | 60,1 |
| 13g | 6h | Beispiel 3 | 1,86 | 37,2 |

### Beispiel 14: Vergleichspolyisocyanat nach DE 10 2006 054289

In einer Standard-Rührapparatur wurden 453,6 g (1 val) Desmodur^{®} N3300 in 80 g Butylacetat bei Raumtemperatur vorgelegt und Stickstoff mit 2L/h übergeleitet. Dann wurden innerhalb von 3 h bei Raumtemperatur 186,5 g (0,2 val) des Alkoxysilans aus Beispiel 1 in 80 g Butylacetat zugetropft.

Man erhielt ein farbloses, flüssiges Polyisocyanat mit folgenden Kennzahlen: Feststoffgehalt 80 Gew.-%, 9,58 % NCO-Gehalt.

### Beispiel 15: siloxanhaltiges Vergleichspolyisocyanat

In einer Standard-Rührapparatur wurden 492,1 g (1 val) Desmodur^{®} N3300 in 250 g Butylacetat bei 80 °C vorgelegt und 2 l/h Stickstoff übergeleitet. Anschließend wurde 7,86 g (0,02 val) des Siloxanblockcopolyols aus Beispiel 2a bei 80 °C zugegeben und die Temperatur 4 h gehalten. Der theoretisch erwartete NCO-Gehaltes wurde titrimetrisch überprüft und dann auf Raumtemperatur abgekühlt sowie 250 g Butylacetat hinzugefügt.

Man erhielt ein klares Polyisocyanat mit folgenden Kennzahlen: Feststoffgehalt 50,3 Gew.-% sowie 10,4 % NCO-Gehalt.

### Beispiel 16: erfindungswesentliches silan- und siloxanmodifiziertes PIC

In einer Standard-Rührapparatur wurden 350,8 g (1 val) Desmodur^{®} N3300 in 250 g Butylacetat bei 80 °C vorgelegt und 2 l/h Stickstoff übergeleitet. Anschließend wurde 5,60 g (0,02 val) des Siloxanblockcopolyols aus Beispiel 2a bei 80 °C zugegeben und die Temperatur 4 h gehalten. Der theoretisch erwartete NCO-Gehaltes wurde titrimetrisch überprüft und dann auf Raumtemperatur abgekühlt. Innerhalb von 3 h wurden 143,6 g (0,2 val) des Alkoxysilans aus Beispiel 1 sowie 250 g Butylacetat hinzugefügt, wobei die Temperatur durch Eiskühlung unter 40 °C gehalten wurde. Nach Überprüfung des theoretischen NCO-Gehaltes wurde auf RT abgekühlt.

Man erhielt ein klares, flüssiges Polyisocyanat mit folgenden Kennzahlen: Feststoffgehalt 50,6 Gew.-% sowie 5,75 % NCO-Gehalt.

### Beispiel 17: Vergleichspolyisocyanat, nanopartikelhaltig

129,6 g des Produkts aus Beispiel 14 in 77,8 g Butylacetat wurden in einer Standard-Rührapparatur vorgelegt und mit 392,7 g Organosilicasol^{™} MEK-ST (Nissan Chemicals Corp.) innerhalb von 30 min versetzt. Das resultierende nanopartikelmodifizierte Polyisocyanat war flüssig und transparent und hatte einen NCO-Gehalt von 1,76 Gew.-% bei einem Feststoffgehalt von 37,2 Gew.-%. Der Anteil an SiO₂-Nanopartikeln in der Dispersion betrug 19,6 Gew.-% und im Feststoff 53,2 Gew.-%.

### Beispiel 18: Vergleichspolyisocyanat, nanopartikelhaltig

136,3 g des Produkts aus Beispiel 15 wurden in einer Standard-Rührapparatur vorgelegt und mit 363,7 g Organosilicasol gemäß Beispiel 3 innerhalb von 30 min versetzt. Das resultierende modifizierte, blockierte Polyisocyanat war transluzent und hatte einen NCO-Gehalt von 2,81 Gew.-% bei einem Feststoffgehalt von 36,2 Gew.-% und gelierte nach 1 Tag. Der Anteil an SiO₂-Nanopartikeln in der Dispersion betrug 21,8 Gew.-% und im Feststoff 61 Gew.-%.

### Beispiel 19: erfindungsgemäßes Polyisocyanat, nanopartikelhaltig

173,4 g des Produkts aus Beispiel 16 wurden in einer Standard-Rührapparatur vorgelegt und mit 326,6 g Organosilicasol gemäß Beispiel 3 innerhalb von 30 min versetzt. Das resultierende modifizierte, blockierte Polyisocyanat war transparent und hatte einen NCO-Gehalt von 1,94 Gew.-% bei einem Feststoffgehalt von 37,5 Gew.-%. Der Anteil an SiO₂-Nanopartikeln in der Dispersion betrug 19,6 Gew.-% und im Feststoff 52,8 Gew.-%. Die Lagerstabilität bis zur Gelierung betrug ca. 1 Monat.

### Anwendungstechnische Ausprüfung der blockierten Polyisocyanate:

Das erfindungsgemäße Polyisocyanat aus Beispiel 9 wurde mit Desmophen^{®} A870 BA in den Verhältnissen NCO/OH von 1,0 sowie 0,1% Baysilone OL 17 (fest/BM fest. 10 %-ige Lösung in MPA), 2,0% BYK 070 (Lff./BM fest), 1,0% Tinuvin 123 (Lff./BM fest), 1,5% Tinuvin 384-2 (Lff./BM fest) und 0,5 % DBTL (fest/BM fest, 10 %-ige Lösung in MPA) als Lackadditive abgemischt und gut verrührt. Die Festkörper der Lacke lagen zwischen 40 und 50 % und wurden gegebenenfalls mit einem Lösemittelgemisch MPA/SN 1:1 eingestellt. Bis zur Verarbeitung wurde der Lack noch 10 min. entlüftet. Der Lack wurde dann mit einer Fließbecherpistole in 1,5 Kreuzgängen auf den vorbereiteten Untergrund appliziert (3,0-3,5 bar Druckluft, Düse: 1,4-1,5 mm Ø, Abstand Düse-Substrat: ca. 20-30 cm). Nach einer Ablüftzeit von 15 min. wurde der Lack bei 140°C für 30 min. eingebrannt. Die Trockenschichtdicke betrug jeweils 30-45 µm. Die Ergebnisse sind in Tabelle 2 zusammengestellt.

Zum Vergleich wurde ein konventionelles Lacksystem aus Desmophen^{®} A 870 und Desmodur^{®} VP LS 2253 sowie den Vergleichspolyisocyanaten aus den Beispielen 5 und 6 mit Lackadditiven (Tabelle 1) formuliert und analog appliziert. Die Ergebnisse sind ebenfalls in Tabelle 2 zusammengefasst.

**Tabelle 2a Vergleich der lacktechnologischen Eigenschaften, blockierter Polyisocyanate**

| **Polyisocyanat** | | **Bsp. 9** | **Bsp. 6** | **LS 2253** | **Bsp. 5** |
|---|---|---|---|---|---|
| **Pendeldämpfung** n. König | [s] | 192 | 189 | 189 | 169 |
| **Lösemittelbeständigkeit**(X/MPA/EA/Ac)[Note]¹⁾ 5 min. | | 0024 | 1244 | 1255 | 1144 |
| **Chemikalienbeständigkeit**(Gradientenofen)[°C] | | 40 | 36 | 36 | 36 |
| Baumharz | | 62 | 52 | 46 | 59 |
| VE-Wasser | | 44 | 40 | 43 | 43 |
| NaOH, 1% | | 45 | 44 | 45 | 43 |
| H₂SO₄, 1% FAM, 10 min. | [Note]¹⁾ | 0 | 0 | 0 | 2 |
| **Kratzfestigkeit** | | | | | |
| ***Amtec Kistler-Laborwaschanlage*** | | 86,1 | 87,5 | 88,4 | 87,0 |
| Ausgangsglanz | 20° | 19,2 | 27,6 | 35,7 | 22,8 |
| Glanzverlust (ΔGl.) n. 10 Waschzyklen | 20° | 77,7 | 68,5 | 59,6 | 73,8 |
| Relativer Restglanz | [%] | 87,2 | 83,5 | 82,4 | 87,2 |
| Relativer Restglanz n. Reflow 2 h | 60°C | 86,1 | 87,5 | 88,4 | |
| [%] | | 16,1 | 58,2 | 62,2 | |
| ***Hammertest* + *Stahlwolle*** | | | | | |
| | | 81,3 | 33,5 | 29,6 | |
| Ausgangsglanz | 20° | | | | |
| | | 97,7 | 84,6 | 91,9 | |
| Glanzverlust (ΔGl.) n. 10 Doppelhüben | 20° | | | | |
| | | 86,1 | 87,5 | 88,4 | |
| Relativer Restglanz | [%] | 8,0 | 55,8 | 54,9 | |
| Relativer Restglanz n. Reflow 2 h | 60°C | | | | |
| [%] | | 90,7 | 36,2 | 37,9 | |
| ***Hammertest* + *Polishing Paper*** | | 99,5 | 90,3 | 92,5 | |
| Ausgangsglanz | 20° | | | | |
| Glanzverlust (ΔGl.) n. 10 Doppelhüben | 20° | | | | |
| Relativer Restglanz | [%] | | | | |
| Relativer Restglanz n. Reflow 2 h | 60°C | | | | |
| [%] | | | | | |

| | | | | | |
|---|---|---|---|---|---|
| ¹⁾ 0 - gut; 5 - schlecht | | | | | |

Das erfindungsgemäß modifizierte, blockierte PIC enthaltend SiO₂-Nanopartikel aus Beispiel 9 zeigt im Vergleich zu den modifizierten Polyisocyanaten aus den Beispielen 5 und 6 sowie zu dem DMP-blockierten Polyisisocyanat LS 2253 Verbesserungen der Lösemittelbeständigkeit, der Wasserbeständigkeit sowie der Trocken- und Naßverkratzung sowohl vor als auch nach Reflow. Die anderen Eigenschaften blieben dabei erhalten.

In einer weiteren Prüfreihe wurden aminosilanmodifizierte, nanopartikelhaltige Polyisocyanate (DE 10 2006 054289) mit erfindungsgemäßen Amino- und Polysiloxanmodifizierten, nanopartikelhaltigen Polyisocyanaten verglichen. Hierzu wurde ähnlich wie oben beschrieben verfahren. Die Aushärtung erfolgte mit Desmophen A870 bei einem NCO-Verhältnis von 1:1. Die Lacke wurden jedoch mit Hilfe von MPA/SN100 (1:1) auf Auslaufviskositäten zwischen 20 und 25 sec eingestellt und nicht auf einen Festkörpergehalt. Daraus resultierten Spritzfestkörper von 40 bis 60 %. Die Trocknung erfolgte 30 min bei RT, dann 30 min bei 140°C und anschließend 16h bei 60°C. Die Ergebnisse sind in Tabelle 2b dargestellt.

**Tabelle 2b Vergleich der lacktechnologischen Eigenschaften der erfindungsgemäßen blockierten Polyisocyanate mit dem Ansatz aus DE10 2006 054289**

| ***Polyisocyanat*** | **D'dur 2253** | **LS** | **Bsp. 12** | **Bsp. 8a** | **Bsp. 8b** |
|---|---|---|---|---|---|
| | | | **E** | **V** | **V** |
| **FK%** | **75,0** | | **61,5** | **62,3** | **65** |
| **NCO%** | **10,5** | | **2,86** | **4,83** | **3,13** |
| **Zusammensetzung Lack** | | | | | |
| Desmophen A 870 | 75,3 | | 40,0 | 41,1 | 41,0 |
| Baysilone OL 17 (10%ig MPA) | 0,9 | | 0,9 | 0,9 | 0,9 |
| Byk 070 | 0,9 | | 0,9 | 0,9 | 0,9 |
| Tinuvin 123 | 0,9 | | 0,9 | 0,9 | 0,9 |
| Tinuvin 384-2 | 1,4 | | 1,4 | 1,4 | 1,4 |
| **Gesamt Komp.1** | 79,4 | | 44,1 | 45,2 | 45,1 |
| Desmodur VP LS 2253 | 51,5 | | | | |
| Beispiel 12 | | | 101,8 | | |
| Beispiel 8a | | | | 99,3 | |
| Beispiel 8b | | | | | 95,3 |
| **Gesamt Komp.1 + 2** | 130,9 | | 145,9 | 144,5 | 140,4 |
| **MPA/SN100 (1:1) Visk.** | 58,6 | | 98,6 | 9,4 | 32,1 |
| **Viskosität DIN4 in s** | 20 | | 23 | 22 | 20 |
| | | | | | |
| **Glanz/Haze vor Verkratzung** | 89,6/9,7 | | 87,5 / 8,5 | 73,6 / 97,3 | 87,7 / 9,1 |
| **Trockenkratzfestigkeit** | | | | | |
| Restglanz n. Belastung | 32,1 | | 70,4 | nicht mess- | 61,4 |
| Restglanz n. Reflow | 82,3 | | 84,4 | bar! | 85,1 |
| **Pendelhärte RT in sek** | 203 | | 207 | 185 | 202 |
| **Beständigkeiten** | | | | | |
| Xylol | 3 | | 0-1 | 0-1 | 1-2 |
| MPA | 3 | | 0-1 | 1 | 2 |
| Ethylacetat | 3-4 | | 3-4 | 3-4 | 3-4 |
| Aceton | 3-4 | | 3-4 | 3-4 | 3-4 |
| FAM | 2 | | 0-1 | 0-1 | 1 |
| **Visuelle Beurteilung direkt nach dem Lackieren** | i.O. | | i.O. | Schlechter Verlauf | i.O |

Das erfindungsgemäß modifizierte, nanopartikelhaltige Polyisocyanat aus Beispiel 12 zeigt in der eingesetzten Formulierung eine verbesserte Kratzfestigkeit, Pendelhärte sowie Verlauf, Glanz und Haze im Vergleich zu dem aminosilanmodifizierten, nanopartikelhaltigen Polyisocyanat entsprechend DE 10 2006 054289 (Beispiel 8a). Durch Einsatz des Organosols aus Beispiel 3 entsprechend Beispiel 8b konnten die Kratzfestigkeit und Pendelhärte des Polyisocyanaes entsprechend DE 10 2006 054289 zwar deutlich verbessert werden, das Niveau des erfindungsgemäßen Polyisocyanates konnte jedoch nicht erreicht werden. Grundsätzlich lassen sich Trockenkratzfestigkeit und Lösemittelbeständigkeit durch erfindungsgemäßes Polyisocyanat gegenüber dem nanopartikelfreien Vergleich verbessern.

**Tabelle 2c Vergleich der lacktechnologischen Eigenschaften der erfindungsgemäßen blockierten Polyisocyanate, unterschiedlicher Siloxanbaustein**

| Polyisocyanat | **D'dur VP LS 2253** | **Beispiel 13a** |
|---|---|---|
| **FK%** | **75** | **62,2** |
| **NCO%** | **10,5** | **2,86** |
| **NCO:OH** | 1,0 | 1,0 |
| Desmodur A 870 | 80,0 | 42,8 |
| Baysilone OL 17 (10%ig MPA) | 1,0 | 1,0 |
| Byk 070 | 1,0 | 1,0 |
| DBTL (1%ig in BuAc) | 1,0 | 1,0 |
| Tinuvin 123 | 1,0 | 1,0 |
| Tinuvin 384-2 | 1,4 | 1,4 |
| **Gesamt Komp.1** | 85,4 | 48,2 |
| Desmodur VP LS 2253 | 55,4 | |
| Beispiel 13a | | 108,8 |
| **Gesamt Komp.1 + 2** | 140,8 | 157,0 |
| MPA/SN100 (1:1) Visk. | 53,1 | 40,2 |
| Viskosität DIN4 in s | 24 | 18 |
| Festkörper in % | 52,2 | 51,3 |
| **Glanz/Haze vor Verkratzung** | 90,8/ 8,1 | 85,4 / 10,7 |
| **Kratzfestigkeit** | | |
| Restglanz nach Belastung | 32,3 | 63,8 |
| Restglanz nach. Reflow | 60,6 | 79,3 |
| **Pendelhärte RT in sek** | 181 | 190 |

Erfindungsgemäßes, nanopartikelhaltiges Polyisocyanat zeigt eine deutlich erhöhte Kratzfestigkeit und Pendelhärte im Vergleich zum Standard.

### Anwendungstechnische Ausprüfung der nicht blockierten Polyisocyanate:

Allgemeine Bedingungen MMT 79-72/1, 2, 5, 6 sowie MMT 79-57/6:

A 870 BA, Katalysatorfrei, 40-50 % Spritzkörpergehalt, 25 min bei 140 °C + 16 h bei 60 °C Einbrennbedingungen, Klarlackschichtdicke 35-52 µm, klare Lacke, visuell i.O.

### Anwendungstechnische Prüfung

Das erfindungsgemäße Polyisocyanat aus Beispiele 16 wurde mit Desmophen^{®} A 870 BA in den Verhältnissen NCO/OH von 1;0 sowie Lackadditiven (Tabelle 3) abgemischt und gut verrührt. Die Festkörper der Lacke lagen zwischen 40 und 50 % und wurden gegebenenfalls mit einem Lösemittelgemisch MPA/SN 1:1 eingestellt. Bis zur Verarbeitung wurde der Lack noch 10 min. entlüftet. Der Lack wurde dann mit einer Fließbecherpistole in 1,5 Kreuzgängen auf den vorbereiteten Untergrund appliziert (3,0-3,5 bar Druckluft, Düse: 1,4-1,5 mm Ø, Abstand Düse-Substrat: ca. 20-30 cm). Nach einer Ablüftzeit von 15 min. wurde der Lack bei 140°C für 25 min. eingebrannt. Die Trockenschichtdicke betrug jeweils 30-45 µm. Nach einer Konditionierung/Alterung von 16 h bei 60°C wurde mit der lacktechnischen Prüfung begonnen. Die Ergebnisse sind in Tabelle 4 zusammengestellt.

Zum Vergleich wurde ein konventionelles Lacksystem aus Desmophen^{®} A 870 und Desmodur^{®} N 3390 sowie den modifizierten, nanopartikel-freien Polyisocyanaten aus Beispiel 12 bis 14 mit Lackadditiven (Tabelle 3) formuliert und analog appliziert. Die Ergebnisse sind ebenfalls in Tabelle 4 zusammengefasst.

**Tabelle 3. Einsatzmengen Additive**

| **Standard 2K-PUR-Lacke:** |
|---|
| 0,1% Baysilone OL 17 (fest/BM fest), eingesetzt als 10 %-ige Lösung in MPA |
| 2,0% BYK 070 (Lff./BM fest) |
| 1,0% Tinuvin 123 (Lff./BM fest) |
| 1,5% Tinuvin 384-2 (Lff./BM fest) |

**Tabelle 4 Vergleich der lacktechnologischen Eigenschaften, 2K, unblockierte Polyisocyanate**

| **Polyisocyanat** | | **Bsp. 14** | **Bsp. 15** | **Bsp. 18** | **N 3390** | **Bsp. 16** |
|---|---|---|---|---|---|---|
| **Pendeldämpfung** n. König | [s] | 179 | 181 | 181 | 185 | 67 |
| **Lösemittelbeständigkeit** (X/MPA/EA/Ac)[Note]¹⁾ 5 min. | | 1145 | 1144 | 2234 | 1024 | 4455 |
| **Chemikalienbeständigkeit** ofen)[°C] | (Gradienten- | 44 | 49 | >68 | 48 | |
| VE-Wasser | | | | | | |
| **Kratzfestigkeit** | | | | | | |
| ***Amtec Kistler-Laborwaschanlage*** | | 88,4 | 87,5 | 85,8 | 88,0 | |
| Ausgangsglanz 20° | | 38,0 | 25,0 | 24,1 | 31,4 | |
| Glanzverlust (ΔGl.) n. 10 Waschzyklen 20° | | 57,0 | 71,4 | 71,9 | 64,3 | |
| Relativer Restglanz | [%] | 84,7 | 85,6 | 82,4 | 87,6 | |
| Relativer Restglanz n. Reflow 2 h 60°C | [%] | 88,4 | 87,5 | 85,8 | 88,0 | |
| ***Hammertest* + *Stahlwolle*** | | 64,2 | 66,4 | 16,6 | 58,7 | |
| Ausgangsglanz 20° | | 27,4 | 24,1 | 80,7 | 33,3 | |
| Glanzverlust (ΔGl.) n. 10 Doppelhüben 20° | | 89,1 | 83,1 | 95,3 | 86,4 | |
| Relativer Restglanz | [%] | 88,4 | 87,5 | 85,8 | 88,0 | |
| Relativer Restglanz n. Reflow 2 h 60°C | [%] | 74,2 | 63,5 | 4,6 | 62,3 | |
| ***Hammertest* + *Polishing Paper*** | | 16,1 | 27,4 | 94,6 | 29,2 | |
| Ausgangsglanz | 20° | 83,4 | 85,9 | 99,5 | 90,1 | |
| Glanzverlust (ΔGl.) n. 10 Doppelhüben | 20° | | | | | |
| Relativer Restglanz | [%] | | | | | |
| Relativer Restglanz n. Reflow 2 h 60°C | [%] | | | | | |

| | | | | | | |
|---|---|---|---|---|---|---|
| ¹⁾ 0 - gut; 5 - schlecht | | | | | | |

Das erfindungsgemäß modifizierte Polyisocyanat enthaltend SiO₂-Nanopartikel aus Beispiel 18 zeigt Verbesserungen bei der Wassserbeständigkeit und Trockenverkratzung, sowohl vor als auch nach Reflow im Vergleich zum reinen Polyisocyanat (Standard 2K). Die Naßverkratzung vor Reflow wurde ebenfalls verbessert. Im Vergleich zu DE 10 2006 054289 (Bsp. 16) konnte die Lösemittelbeständigkeit und die Pendelhärte verbessert werden.

## Patentansprüche

1. Verfahren zur Herstellung nanopartikelmodifizierter Polyisocyanate, bei dem
A) Polyisocyanate mit
B) Alkoxysilanen der Formel (I)
Q-Z-SiXₐY₃₋ₐ (I)
in welcher
Q eine gegenüber Isocyanaten reaktive Gruppe,
X eine hydrolysierbare Gruppe,
Y gleiche oder verschiedene Alkylgruppen
Z eine C₁-C₁₂-Alkylengruppe und
a eine ganze Zahl von 1 bis 3 ist,
C) hydroxylgruppenhaltigen Polysiloxanen mit zahlenmittleren Molekulargewichten von 200 bis 3000 g/mol und einer mittleren OH-Funktionalität von größer oder gleich 1,8 gemäß Formel (II) 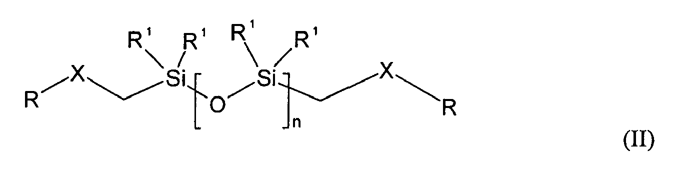
X ein aliphatischer, gegebenenfalls verzweigter, gegebenenfalls Ethergruppen enthaltender C₁ bis C₂₀-Rest,
R hydroxyfunktioneller Rest,
R¹ Wasserstoff oder ein gegebenenfalls heteroatomhaltiger C₁ bis C₂₀-Kohlenwasserstoffrest und
n 1 bis 40 ist
D) gegebenenfalls Blockierungsmitteln
umgesetzt werden, und anschließend
E) anorganische Partikel mit einer mittels dynamischer Lichtstreuung in Dispersion bestimmten mittleren Partikelgröße (Z-Mittelwert) von kleiner als 200 nm, die gegebenenfalls oberflächenmodifiziert sind, eindispergiert werden.

2. Verfahren gemäß Anspruch 1, **dadurch gekennzeichnet, dass** in A) Polyisocyanate mit Uretdion-, Isocyanurat-, Allophanat-, Biuret-, Iminooxadiazindion- und/oder Oxadiazintrionstrukturen eingesetzt werden.

3. Verfahren gemäß Anspruch 1 oder 2, **dadurch gekennzeichnet, dass** in A) Polyisocyanate auf Basis von IPDI, MDI, TDI, HDI oder deren Gemischen eingesetzt werden.

4. Verfahren gemäß einem der Ansprüche 1 bis 3, **dadurch gekennzeichnet, dass** in Formel (I) die Gruppe X eine Alkoxy- oder Hydroxygruppe, Y eine lineare oder verzweigte C₁-C₄-Alkylgruppe und Z eine lineare oder verzweigte C₁-C₄-Alkylengruppe ist, wobei a in Formel (I) für 1 oder 2 steht und die Gruppe Q eine gegenüber Isocyanaten unter Urethan-, Harnstoff-oder Thioharnstoffbildung reagierende Gruppe ist.

5. Verfahren gemäß einem der Ansprüche 1 bis 4, **dadurch gekennzeichnet, dass** in B) als Verbindungen der Formel (I) alkoxysilylgruppenhaltige Asparaginsäureester eingesetzt werden.

6. Verfahren gemäß einem der Ansprüche 1 bis 5, **dadurch gekennzeichnet, dass** bei den hydroxylgruppenhaltigen Polysiloxanen der Formel (II) R ein hydroxyfunktioneller Carbonsäureester der Formel 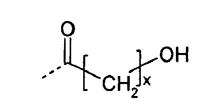 wobei x = 3 bis 5 ist,
oder eine hydroxyalkylfunktionelle Aminogruppe der Formel 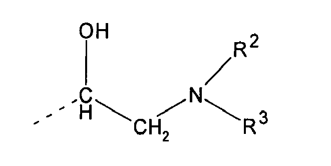 wobei
R² ein aliphatischer linearer, verzweigter oder cyclischer Hydroxyalkylrest und
R³ Wasserstoff oder entsprechend der Definition des Restes R² ist
ist.

7. Verfahren gemäß einem der Ansprüche 1 bis 6, **dadurch gekennzeichnet, dass** die hydroxylgruppenhaltigen Polydimethylsiloxane der Formel (II) zahlenmittlere Molekulargewichte von 250 bis 2250 g/mol haben.

8. Verfahren gemäß einem der Ansprüche 1 bis 7, **dadurch gekennzeichnet, dass** das Verhältnis der NCO-Gruppen des in A) eingesetzten zu modifizierenden Polyisocyanats zu den NCO-reaktiven OH-Gruppen des hydroxylgruppenhaltigen Polysiloxans der Formel (II) 1 : 0,001 bis 1 : 0,4 und das Verhältnis der NCO-Gruppen des in A) eingesetzten zu modifizierenden Polyisocyanats zu den NCO-reaktiven Gruppen Q des Alkoxysilans der Formel (I) 1 : 0,01 bis 1 : 0,75 beträgt.

9. Verfahren gemäß einem der Ansprüche 1 bis 8, **dadurch gekennzeichnet, dass** in Schritt D) die noch freien Isocyanatgruppen blockiert werden.

10. Verfahren gemäß einem der Ansprüche 1 bis 9, **dadurch gekennzeichnet, dass** die Nanopartikel in Schritt E) in Form von Dispersionen in organischen Lösungsmitteln eingebracht werden.

11. Verfahren gemäß Anspruch 10, **dadurch gekennzeichnet, dass** als organische Lösungsmittel alkohol- und ketonfreie Lösungsmittel eingesetzt werden.

12. Verfahren gemäß einem der Ansprüche 1 bis 11, **dadurch gekennzeichnet, dass** als Nanopartikel in Schritt E) Siliziumoxid, Aluminiumoxid, Ceroxid, Zirkonoxid, Nioboxid oder Titanoxid, Zinkoxid eingesetzt werden.

13. Verfahren gemäß einem der Ansprüche 1 bis 12, **dadurch gekennzeichnet, dass** die in E) eingesetzten Nanopartikel oberflächenmodifiziert sind.

14. Nanopartikelmodifizierte Polyisocyanate erhältlich nach einem Verfahren gemäß einem der Ansprüche 1 bis 13.

15. Polyurethansysteme umfassend nanopartikelmodifizierte Polyisocyanate gemäß Anspruch 14.

16. Beschichtungen, Verklebungen oder Formkörper erhältlich unter Verwendung der Polyurethansysteme gemäß Anspruch 15.
